# EUROPEAN PATENT APPLICATION

(11) **EP 1 683 625 A1**
(43) Date of publication of application: **26.07.2006**
(21) Application number: 06100347.1
(22) Date of filing: 13.01.2006
(51) Int. Cl.: B29C 65/58, B65D 47/12, B21D 51/38

(54) **Method and apparatus for preassembling closures for bottles or containers in general**

(30) Priority: 20.01.2005 IT MI20050065
(71) Applicant: Galbusera, Pietro, 20043 Arcore (Prov.of Milan) (IT); Galbusera, Ruggero, 20043 Arcore (Prov.of Milan) (IT)
(72) Inventor: Galbusera, Pietro, 20043 Arcore (Prov.of Milan) (IT); Galbusera, Ruggero, 20043 Arcore (Prov.of Milan) (IT)
(74) Representative: Modiano, Micaela Nadia

(57) **Abstract**

A method for preassembling closures (30) for bottles or containers in general, comprising the steps of arranging the two parts (31, 32) of the closure (30), which can be mutually assembled by pressing, respectively on a first support and movement element (2) and on a second support and movement element (3), which face each other and can move in a mutually synchronized manner along a travel orientation. The two support and movement elements (2, 3) support the two parts (31, 32) of the closure to be assembled so that the faces to be mated face each other, and move gradually closer to each other during their motion along the travel orientation, producing the assembly, by pressing, of the two mutually facing parts of the closure.

## Description

The present invention relates to a method and an apparatus for preassembling closures for bottles or containers in general.

Containers, generally for liquids, are known which are closed by means of a screw cap, usually made of molded synthetic material, which is composed of two parts, respectively a first part, which is monolithically connected to the body of the container and forms the dispensing outlet of the container, and a second part, which is mated, usually by means of a threaded coupling, to the first part so as to allow the engagement of the second part with the first part in order to close the container or disengage it from the first part in order to open the container when one wishes to pour the liquid contained therein.

These closures are generally fitted on the container after the two parts that compose the closure have been preassembled. This preassembly is performed by pressing, i.e., by pushing against each other the two parts that compose the closure, forcing the threaded coupling that occurs between the two parts.

This preassembly operation is currently performed by means of appropriately provided machines equipped with a worktable, which has a vertical axis, is provided with a plurality of receptacles distributed around said axis, and can be actuated with an intermittent rotary motion about said axis so as to position in each instance a receptacle at work stations. In one of these work stations, the two parts of the closure to be assembled are arranged so that they are mutually superimposed within a receptacle, which by way of the intermittent rotation of the worktable about its own axis is arranged at an assembly station, where there is a vertically movable presser, which presses the upper part onto the lower part, performing the preassembly of the closure.

Other types of machine are provided with two feed channels, which converge at a same point, each conveying one of the two parts of the closure to be assembled. At the convergence point of the two channels, the two parts that compose the closure are superimposed and a presser performs the assembly, by pressing, of the two parts.

The assembly methods performed by these machines are based substantially on superimposing the two parts that compose the closure and then on pressing one part onto the other in order to perform their assembly. These methods have the drawback of necessarily requiring an intermittent operation of the machine used, since they require the presser to stop in order to perform its function, and this intermittent operation makes it difficult to reduce the time required for assembly and consequently increase significantly the productivity of these machines.

The aim of the present invention is to provide a method for preassembling closures for bottles or containers in general which allows to reduce the time required for this operation, allowing to achieve distinctly higher productivities than possible with known types of preassembly method.

Within this aim, an object of the invention is to provide a method which allows to perform in a short time the assembly of large quantities of closures in a continuous cycle.

Another object of the invention is to provide an apparatus for performing the method according to the invention which is structurally simple.

Another object of the invention is to provide a machine for preassembling closures for bottles or containers in general which is highly reliable and precise in operation.

This aim and these and other objects, which will become better apparent hereinafter, are achieved by a method for preassembling closures for bottles or containers in general, of the type that comprises a first part of the closure and a second part of the closure which can be assembled together by pressing, characterized in that it comprises the steps of:
- arranging the two parts that compose the closure to be preassembled respectively on a first support and movement element and on a second support and movement element, which are adapted to support the two parts that compose the closure so that the faces to be mated face each other; said support and movement elements being movable along a travel orientation and moving gradually closer to each other along the direction of travel along said travel orientation until they have, at a preset mating region, a distance which is substantially equal to the dimensions, parallel to the direction of mutual mating, of said two parts of the closure in the assembled condition;
- actuating said support and movement elements in a mutually synchronized manner so as to make said two parts of the closure face each other at least at an interference region, which is located directly upstream of said mating region along the travel orientation of said support and movement elements, where the distance between said support and movement elements begins to be shorter than the total dimensions of said two parts of the closure in the non-mated condition, and so as to make said two parts of the closure pass through said mating region where the distance between said support and movement elements completes the mutual assembly, by pressing, of the two parts of the closure.

The method according to the invention is performed preferably by using an apparatus for preassembling closures for bottles or containers in general of the type which comprises a first part of the closure and a second part of the closure which can be assembled together by pressing, characterized in that it comprises a first support and movement element and a second support and movement element, which face each other and in which there are receptacles which are suitable to accommodate respectively a first part of the closure and a second part of the closure so that the faces to be mated face each other; said support and movement elements being movable along a travel orientation and moving gradually closer to each other, along the direction of travel along said travel orientation, until they have, at a preset mating region, a distance which is substantially equal to the dimension, parallel to the direction of mutual mating, of said two parts of the closure in the assembled condition; said support and movement elements being actuatable, in a mutually synchronized manner, in order to arrange cyclically a first part of the closure and a second part of the closure so that they face each other at least at an interference region, which is located directly upstream of said mating region along the travel direction of said support and movement elements, where the distance between said support and movement elements begins to be shorter than the total dimensions of said two parts of the closure in the non-mated condition, and so as to make said first part of the closure and said second part of the closure pass through said mating region, where the distance between said support and movement elements completes the mutual assembly, by pressing, of the two parts of the closure.

Further characteristics and advantages of the present invention will become better apparent from the following detailed description of a preferred but not exclusive embodiment of the method and apparatus according to the invention, illustrated by way of non-limiting example in the accompanying drawings, wherein:

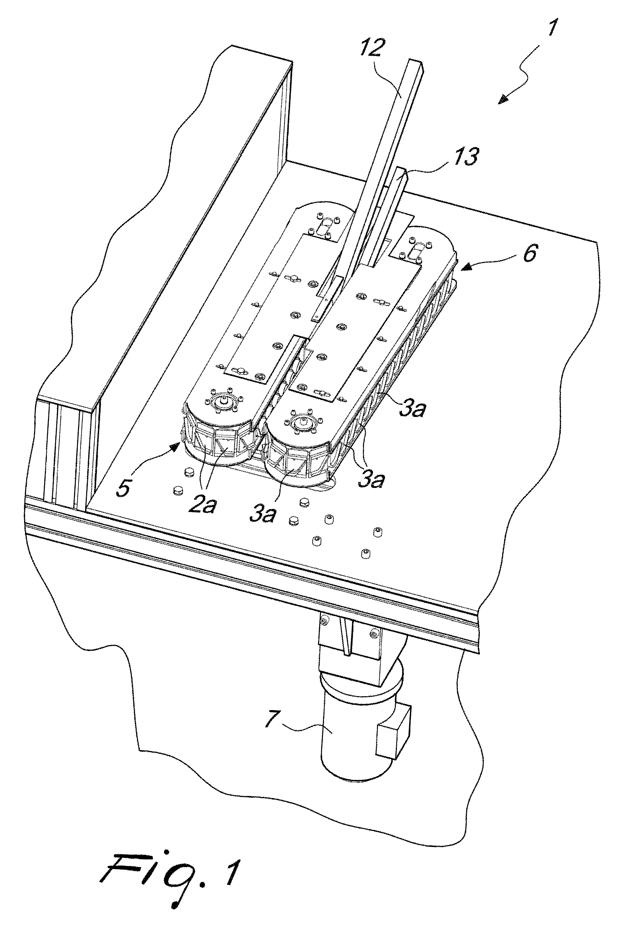

Figure 1 is a schematic perspective view of an apparatus according to the invention;

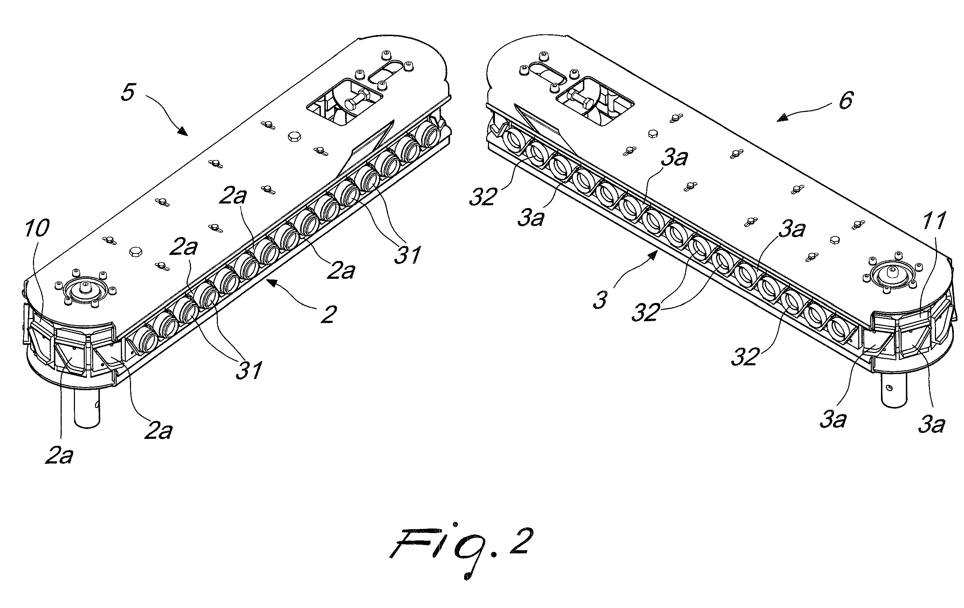

Figure 2 is a perspective view of the support and movement elements, shown mutually spaced with respect to the actual position for the sake of greater clarity;

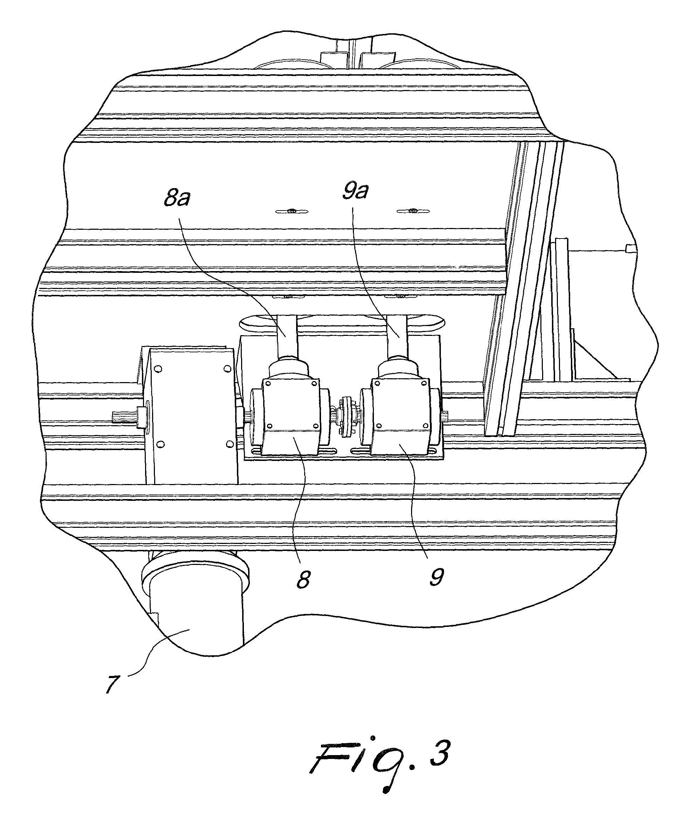

Figure 3 is a perspective view of a detail related to the support and movement elements;
Figure 4 is a schematic top plan view of the apparatus of Figure 1;
Figure 5 is an enlarged-scale sectional view of a detail of Figure 4, taken along the line V-V;
Figure 6 is an enlarged-scale sectional view of a detail of Figure 4, taken along the line VI-VI;
Figure 7 is a perspective view of a closure which can be assembled with the method according to the invention, disassembled into the two parts that compose it.

With reference to the figures, an apparatus according to the invention, generally designated by the reference numeral 1, for preassembling closures 30 composed of a first part 31 and a second part 32, comprises a first support and movement element 2 and a second support and movement element 3, which face each other and in which there are receptacles 2a and 3a which are designed to accommodate individually respectively a first part 31 and a second part 32 of the closures to be assembled, so that the two parts 31 and 32 face each other with their faces to be mated in order to achieve their assembly.

The support and movement elements 2 and 3 can move along a travel orientation 4 and move gradually closer, along the travel direction along the travel orientation 4, until they have, at a preset mating region, where the assembly of the two parts 31 and 32 that compose a closure 30 is completed, a distance which is substantially equal to the dimension, measured parallel to the mutual mating direction, of the two mutually assembled parts 31 and 32.

The support and movement elements 2 and 3 can be actuated, in a mutually synchronized manner, in order to move cyclically a first part 31 of a closure 30 and a second part 32 of the same closure 30 so that they face each other at least at an interference region, which is located directly upstream of the mating region along the travel direction of the support and movement elements 2 and 3, where the distance between the support and movement elements 2 and 3 begins to be shorter than the total dimensions of the two parts 31, 32 of the closure 30 in the condition in which they are not yet mated, and in order to make the first part 31 and the second part 32 of the closure 30 pass through the mating region where the shorter distance between the support and movement means 2 and 3 achieves the mutual assembly, by pressing, of the two parts 31, 32 of the closure 30.

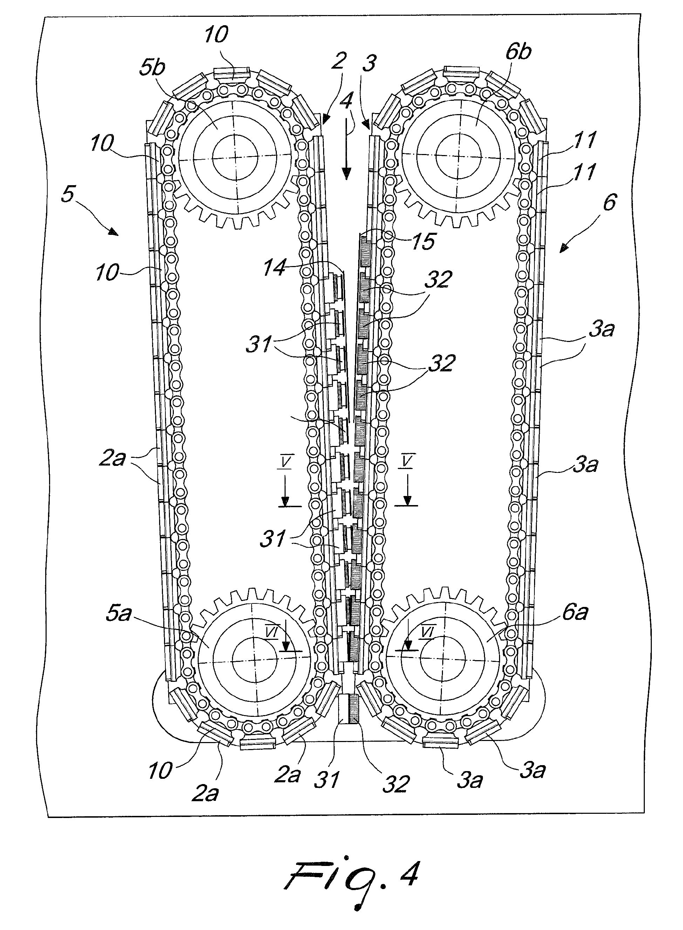

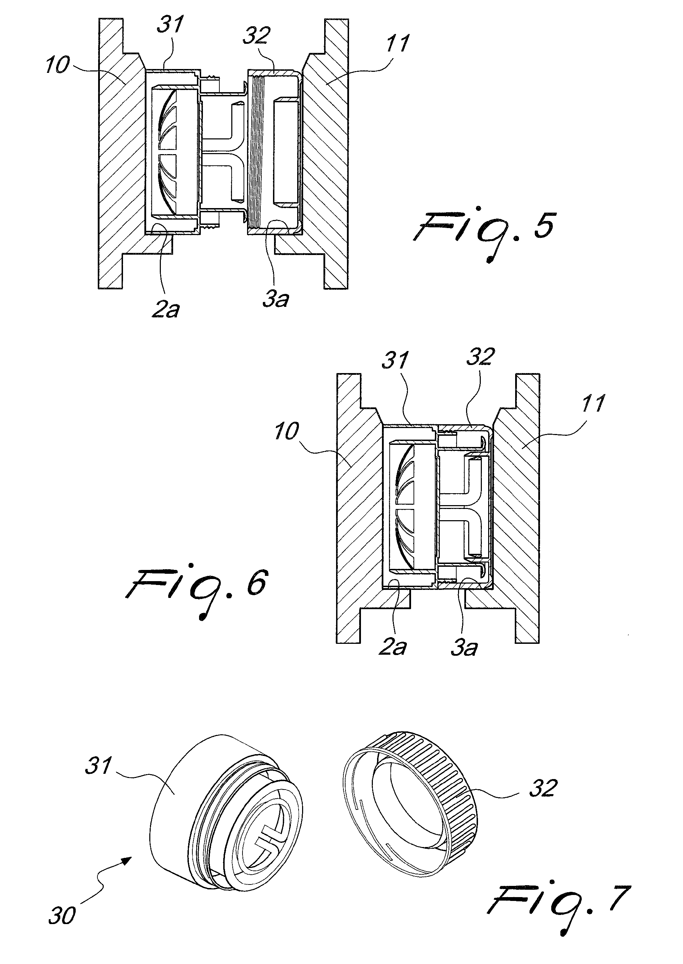

As shown in Figure 4, the mating region is located at the line VI-VI, while the interference region is arranged between the line V-V and VI-VI. Figures 5 and 6, which refer to cross-sections taken at these planes, detail respectively the condition of the two parts 31 and 32 of the closure 30 at the beginning of the region of interference along which the two-part 31 and 32 are superimposed with one of their portions and the condition of completed assembly of the two parts 31 and 32.

Preferably, the first support and movement element 2 and the second support and movement element 3 are constituted respectively by the two mutually facing portions, which are preferably rectilinear, of belts or chains 5, 6. Each one of the belts or chains 5,6 winds around a pair of pulleys or pinions, designated respectively by the reference numerals 5a, 5b and 6a, 6b, which have parallel axes and at least one pulley or pinion; in the illustrated case, the pulleys or pinions 5a, 6a can be actuated with a rotary motion about their respective axes in order to produce the advancement of the mutually facing portions (which constitute the support and movement elements 2 and 3) of the belts or chains 5, 6 along the travel orientation 4.

More particularly, the pulleys or pinions 5a, 6a, which can be actuated with a rotary motion about their corresponding axes, are mutually connected rotationally so as to achieve synchronization in the travel of the two mutually facing portions of the chains or belts 5, 6 along the travel orientation 4. In the illustrated embodiment, for the actuation of the pulleys or pinions 5a, 6a there is a single motor 7, constituted for example by an electric motor, which is connected, by means of its shaft, to the input shaft of a first reduction unit 8, which in turn is connected to the input shaft of a second reduction unit 9. The first reduction unit 8 is connected, by means of its output shaft 8a, to the pulley or pinion 5a, while the second reduction unit 9 is connected, by means of its output shaft 9a, to the pulley 6a. The reduction units 8 and 9 are provided so as to achieve, for the pulleys 5a and 6a, a rotation with identical speeds and mutually opposite directions of rotation.

Preferably, the axes of the pulleys or pinions 5a, 5b, 6a, 6b are arranged vertically so that the plane along which the two portions of the chains or belts 5, 6 that constitute the support and movement elements 2, 3 face each other is substantially vertical.

In the illustrated embodiment, the support and movement elements are formed by chains, and the receptacles 2a, 3a are formed in blocks 10, 11, which are applied to the links of the chains 5, 6. As an alternative, if belts are used, the receptacles 2a, 3a can be formed in blocks which are applied to the belts or formed directly in the belts.

The receptacles 2a, 3a are open on their side directed away from the belt or chain that supports the blocks in which they are formed, i.e., on the side that is intended to face the portion of the other belt or chain. Further, the receptacles 2a, 3a are open upward in order to allow to insert therein the part of closure that they are intended to support and move.

Advantageously, individual means for feeding the parts 31 and 32 of the closure 30 respectively into the receptacles 2a, 3a are provided. Said feed means comprise, for each belt or chain 5, 6, a channel 12, 13 which is provided with an outlet which leads out, in a region of the path of the corresponding belt or chain 5, 6 arranged upstream of the region of interference along the travel direction of the mutually facing portions of the belts or chains 5, 6, above the receptacles 2a, 3a of the corresponding belt or chain which face cyclically, with their open side, said outlet of the channel 12, 13.

Each channel 12, 13 is fed by means of a selection device of a known type, not shown for the sake of simplicity, which inserts in the corresponding channel the parts 31 or 32 of the closure 30, orientated correctly.

Conveniently, for each belt or chain 5, 6, between the outlet of the corresponding channel 12, 13 and the interference region there is a containment wall 14, 15, which faces the portion of the corresponding belt or chain 5, 6 which faces the portion of the other belt or chain and forms a support for the parts 31, 32 of the closure 30 which are arranged in the receptacles 2a, 3a, preventing the parts 31, 32 from exiting from the corresponding receptacles 2a, 3a. The containment walls 14, 15 end just before the region of interference in order to allow the beginning of the mating of the two parts 31, 32 of a closure 30.

The operation of the apparatus in performing the method according to the invention is as follows.

The belts or chains 5, 6 are actuated so that their two mutually facing portions advance synchronously along the travel orientation 4.

Although the belts or chains 5, 6 can also be actuated with an intermittent motion, actuation with a continuous motion is preferred, allowing to achieve higher assembly speeds.

During the actuation of the belts or chains 5, 6, the parts 31, 32 of the closure 30, by means of the corresponding channel 12, 13, are conveyed into the receptacles 2a, 3a of the corresponding belt or chain 5, 6, upstream of the interference region.

The parts 31, 32 of the closure, once inserted in the corresponding receptacles 2a, 3a, up to the interference region, are retained in the receptacles by the presence of the containment walls 14, 15.

When the parts 31, 32 of the closure 30, as a consequence of the advancement of the portions of the belts or chains 5, 6 along the orientation 4, reach the interference region, as a consequence of the reduction of the distance between said portions of the belts or chains, the mating of the parts 31, 32 begins by means of the gradual insertion of one part of the closure in the other. The assembly by pressing of the parts 31, 32 of the closure 30 is completed when the parts 31, 32 arrive at the mating region, where the distance between the two portions of the belts or chains 5, 6 is minimal.

Downstream of the mating region, owing to the fact that the two mutually facing portions of the belts or chains 5, 6 wind around the pulleys or pinions and therefore move mutually apart, the closure 30, by now assembled, disengages from the belts or chains.

It should be noted that since the mutual assembly of the two parts 31, 32 of the closure 30, with the apparatus and method according to the invention, can be obtained in a continuous cycle by means of the gradual mutual approach of the two parts 31, 32 to be mated, arranged on movement elements which can be actuated at high speeds, it is possible to achieve considerably higher assembly speeds than can be achieved with known types of assembly apparatus and method.

In practice it has been found that the method and the apparatus according to the invention fully achieve the intended aim and objects, since they reduce the time required for the preassembly of the closures, allowing to achieve distinctly higher productivities than can be achieved with known types of preassembly method and apparatus.

Although the method and the apparatus according to the invention have been conceived to perform the preassembly of closures composed of two parts which can be mutually mated by means of a screw coupling, it can also be used to perform the preassembly of closures composed of two parts which can be mutually mated by means of a bayonet mating or by means of a mating by pressing.

The method and apparatus thus conceived are susceptible of numerous modifications and variations, all of which are within the scope of the appended claims; all the details may further be replaced with other technically equivalent elements.

In practice, the materials used, as well as the dimensions, may be any according to requirements and to the state of the art.

The disclosures in Italian Patent Application No. MI2005A000065 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for preassembling closures for bottles or containers in general, of the type that comprises a first part of the closure and a second part of the closure which can be assembled together by pressing, **characterized in that** it comprises the steps of:
- arranging the first and second parts that compose the closure to be preassembled respectively on a first support and movement element and on a second support and movement element, which are suitable to support the two parts that compose the closure so that the faces to be mated face each other; said support and movement elements being movable along a travel orientation and moving gradually closer to each other along the direction of travel along said travel orientation until they have, at a preset mating region, a distance which is substantially equal to the dimensions, parallel to the direction of mutual mating, of said two parts of the closure in the assembled condition;
- actuating said support and movement elements in a mutually synchronized manner so as to make said two parts of the closure face each other at least at an interference region, which is located directly upstream of said mating region along the travel orientation of said support and movement elements, where the distance between said support and movement elements begins to be shorter than the total dimensions of said two parts of the closure in the non-mated condition, and so as to make said two parts of the closure pass through said mating region where the distance between said support and movement elements completes the mutual assembly, by pressing, of the two parts of the closure.

2. The method according to claim 1, **characterized in that** said support and movement elements are actuated with a continuous motion along said travel orientation.

3. The method according to claims 1 and 2, **characterized in that** the travel orientation of said support and movement elements is substantially rectilinear.

4. An apparatus for preassembling closures for bottles or containers in general, of the type that comprises a first part of the closure and a second part of the closure which can be assembled together by pressing, **characterized in that** it comprises a first support and movement element and a second support and movement element, which face each other and in which there are receptacles which are suitable to accommodate respectively a first part of the closure and a second part of the closure so that the faces to be mated face each other; said support and movement elements being movable along a travel orientation and moving gradually closer, along the travel direction along said travel orientation, until they have, at a preset mating region, a distance which is substantially equal to the dimensions, parallel to the direction of mutual mating, of said two parts of the closure in the assembled condition; said support and movement elements being actuatable, in a mutually synchronized manner, so as to cyclically make a first part of the closure and a second part of the closure into conditions face each other at least at an interference region, located directly upstream of said mating region along the travel direction of said support and movement elements, where the distance between said support and movement elements begins to be shorter than the total dimensions of said two parts of the closure in the non-mated condition, and in order to make said first part of the closure and said second part of the closure pass through said mating region, where the distance between said support and movement elements completes the mutual assembly, by pressing, of the two parts of the closure.

5. The apparatus according to claim 4, **characterized in that** said first support and movement element and said second support and movement element are constituted by two mutually facing portions of two belts or chains, each belt or chain being wound around at least one pair of pulleys or pinions which have parallel axes and at least one pulley or pinion for each one of said pairs of pulleys or pinions being actuatable with a rotary motion about the corresponding axis in order to produce the advancement of the mutually facing portions of the belts or chains along said travel orientation.

6. The apparatus according to one or more of the preceding claims, **characterized in that** said pulleys or opinions which can be actuated with a rotary motion about their own axes are mutually connected in their rotation about the respective axes for synchronization of the advancement of the portions of said belts or chains along said travel orientation.

7. The apparatus according to one or more of the preceding claims, **characterized in that** the axes of said pulleys or pinions are substantially vertical for the mutual facing of said two portions along a substantially vertical plane.

8. The apparatus according to one or more of the preceding claims, **characterized in that** said receptacles, formed in said belts or chains and designed to accommodate said parts of the closure, are open not only on their side directed toward the other belt or chain but also in an upper region for the individual access of a corresponding part of the closure to the corresponding receptacle.

9. The apparatus according to one or more of the preceding claims, **characterized in that** it comprises means for individually feeding the parts of the closure into said receptacles.

10. The apparatus according to one or more of the preceding claims, **characterized in that** said individual feeder means comprise, for each one of said belts or chains, a channel provided with an outlet which ends, in a region of the path of said belts or chains located upstream of said interference region along the travel direction of the mutually facing portions of the belts or chains along said travel orientation, above the receptacles of the corresponding chain or belt which face cyclically, with their open side, the outlet of the corresponding channel.

11. The apparatus according to one or more of the preceding claims, **characterized in that** it comprises, for each belt or chain, between the outlet of each channel and said interference region, a containment wall, which faces the portion of the corresponding belt or chain which faces the portion of the other belt or chain and forms a contact region for the parts of closure arranged in the receptacles of the corresponding belt or chain.
